# EUROPÄISCHE PATENTSCHRIFT

(11) **EP 1 752 362 B1**
(45) Veröffentlichungstag und Bekanntmachung des Hinweises auf die Patenterteilung: **08.10.2008**
(21) Anmeldenummer: 06117397.7
(22) Anmeldetag: 18.07.2006
(51) Int. Cl.: B62D 15/02

(54) **Spurassistenzsystem für Fahrzeuge**
Lane-keep assistance system for vehicles
Système d'assistance de trajectoire pour véhicules

(30) Priorität: 08.08.2005 DE 102005037273
(43) Veröffentlichungstag der Anmeldung: 14.02.2007
(73) Patentinhaber: ROBERT BOSCH GMBH, 70442 Stuttgart (DE)
(72) Erfinder: Borchers, Oliver, 70193 Stuttgart (DE)

(56) Entgegenhaltungen:
- EP-A2- 1 531 113

## Beschreibung

### Stand der Technik

Die Erfindung betrifft ein Spurassistenzsystem für Fahrzeuge, welches an eine im Fahrzeug angebrachte Umfeldsensoreinrichtung anschließbar ist, mit einer Erkennungseinheit zur Detektion von mit der Umfeldsensoreinrichtung erfassten Fahrbahnbegrenzungselementen, mit einer Schätzeinheit zur Abschätzung von Gefährdungspotentialen durch die Fahrbahnbegrenzungselemente und mit einem Reaktionsmodul zur Einleitung von Gegenmaßnahmen, welches in Abhängigkeit des abgeschätzten Gefährdungspotential den Zeitpunkt und/oder die Intensität der Gegenmaßnahmen bestimmt, sowie ein entsprechendes Verfahren.

Die Druckschrift WO 2004/084177A2 offenbart ein Sicherheitssystem für Fahrzeuge, welches das Fahrzeugumfeld überwacht und bei drohenden Kollisionen ein hörbares Warnsignal auslöst. Bei diesem System werden mindestens zwei an das Fahrzeug angrenzende Zonen überwacht. Die Warnsignale werden durch ein im Fahrzeug verteilt angeordnetes Lautsprechersystem ortsaufgelöst ausgegeben, wobei die Warnsignale von dem Lautsprecher ausgegeben werden, der mit der Richtung der möglichen Kollision korrespondiert. Zudem werden Warnsignale mit verschiedenen Frequenzen ausgegeben, wobei die Frequenzen den mindestens zwei angrenzenden Zonen zugeordnet sind.

Die Druckschrift DE 102 49 354 A1, die den nächstkommenden Stand der Technik bildet, offenbart ein Spurhaltesystem für ein Kraftfahrzeug sowie dessen Anwendung. Das Spurhaltesystem weist eine am Fahrzeug angebrachte Umfeldsensoreinrichtung zum Erfassen der Fahrspur sowie eine Warneinrichtung zum Warnen des Fahrzeuglenkers für den Fall, dass das Fahrzeug die Fahrspur unter Gefahr zu verlassen droht, auf. Bei diesem System ist zudem - wenn der Fahrer die erste Warnung ignoriert - eine Sekundärwarnvorrichtung vorgesehen, die quasi eine zweite Warnstufe bildet.

Die Druckschrift EP 1531113 A2 offenbart ebenfalls ein Fahrerassistenzsystem zur Unterstützung der Spurhaltung eines Kraftfahrzeugs. Hier wird ein Verfahren beschrieben dass das Verlassen der Fahrbahn über einerseits eine ortsbezogene und andererseits eine zeitbezogene Messung durchführt um durch gegenseitige Plausibilisierung mögliche Fehler wie Lenkwinkelfehler und somit eine unzuverlässige Ortsbestimmung und andererseits Fehler in der Abstandsmessung durch z.B. ungenaue Sensoren zu vermeiden.

### Vorteile der Erfindung

Das erfindungsgemäße Spurassistenzsystem hat gegenüber den bekannten Systemen den Vorteil, dass die Abschätzung des Gefährdungspotentials unter Berücksichtigung der Klassifikation der Fahrbahnbegrenzungselemente erfolgt und dadurch die Ausprägung der Gegenmaßnahme an die Überfahrbarkeit und das individuelle Gefährdungspotential des Fahrbahnbegrenzungselements angepasst wird. Beispielsweise wird im Fall eines möglichen "Überfahrens" einer Beton-Trennwand - also bei einer Kollision mit dieser - die Gegenmaßnahme früher und/oder intensiver eingeleitet werden als im Fall eines möglichen Überfahrens einer aufgemalten Fahrbahnmarkierung. Der Fahrer wird also insbesondere in anspruchsvollen Fahrsituationen, wie z.B. in Baustellen mit engen Fahrspuren, unterstützt, indem durch angepasst frühzeitig und/oder angepasst intensive eingeleitete Gegenmaßnahmen eine seitliche Kollision mit Trennwänden, Bordsteinen oder das Überfahren von Banketten vermieden wird. Das Unfallrisiko, welches z.B. durch ein vom Fahrer zu spät eingeleitetes Fahrmanöver zur Korrektur seiner Fahrlinie entstehen kann, wird mit dem erfindungsgemäßen System deutlich reduziert.

Bei dem erfindungsgemäßen Spurassistenzsystem ist vorgesehen, dass dieses an eine im Fahrzeug angebrachte oder und/oder anbringbare Umfeldsensoreinrichtung angeschlossen und/oder anschließbar ist. Die Umfeldsensoreinrichtung ist vorzugsweise als Kamera, insbesondere als CCD- oder CMOS-Kamera ausgebildet. Bei abgewandelten Ausführungsformen kann die Umfeldsensoreinrichtung als eine Mehrzahl von Kameras ausgebildet sein, wobei insbesondere die Blickrichtung einer Kamera in Fahrtrichtung und die Blickrichtung einer anderen Kamera in Gegenrichtung ausgerichtet ist. Alternativ können auch sogenannte 360°-Kameras, die ein Sichtfeld von 360° aufweisen, zum Einsatz kommen.

Das Spurassistenzsystem umfasst eine Erkennungseinheit zur Detektion von mit der Umfeldsensoreinrichtung erfassten Fahrbahnbegrenzungselementen, wobei die Umfeldsensoreinrichtung vorzugsweise zur Übergabe von Bildern oder Bildersequenzen an die Erkennungseinheit ausgebildet und die Erkennungseinheit zur Detektion und/oder Verfolgung der in den Bildern bzw. Bildersequenzen abgebildeten Fahrbahnbegrenzungselemente ausgebildet ist. Die Fahrbahnbegrenzungselemente umfassen bevorzugt aufgemalte Fahrbahnmarkierungen und andere Fahrbahnführungselemente, Bordsteine, Beton-Trennwände, Baken und/oder Bankette etc..

Eine Schätzeinheit beurteilt das Gefährdungspotential, welches insbesondere durch die Fahrbahnbegrenzungselemente selbst - z.B. durch Kollision mit den Fahrbahnbegrenzungselementen - begründet wird und/oder das Gefährdungspotential, welches als Folge eines Überfahrens der Fahrbahnbegrenzungselemente - z.B. durch Überfahren einer aufgemalten, durchgezogenen Fahrbahnmarkierung - begründet ist. Die Schätzeinheit ist schaltungstechnisch und/oder programmtechnisch dementsprechend ausgebildet.

Ferner ist ein Reaktionsmodul vorgesehen, welches zur Einleitung von Gegenmaßnahmen ausgebildet ist. Die Gegenmaßnahmen werden in Abhängigkeit des abgeschätzten Gefährdungspotentials eingeleitet. Ist das Gefährdungspotential höher, so wird die Gegenmaßnahme früher und/oder in einer stärkeren Intensität eingeleitet.

Erfindungsgemäß ist vorgesehen, dass die Erkennungseinheit die Fahrbegrenzungselemente klassifiziert, also nach konkreten und/oder abstrakten Eigenschaften der Fahrbegrenzungselemente einteilt. Unter konkreten Eigenschaft kann beispielsweise eine Einteilung nach der Gattung, also nach aufgemalter Fahrbahnmarkierung, Bordstein, Beton-Trennwände, Baken, Bankette etc., verstanden werden. Unter abstrakten Eigenschaften ist z.B. die Art zu verstehen, so dass eine Einteilung nach Kriterien wie Überfahrbarkeit, Unfallfolgen bei Kollision, Seitenfahrbegrenzung oder Mittelbegrenzung etc. erfolgt. Die Schätzeinheit ist ausgelegt, um diese Klassifikation bei der Beurteilung des Gefährdungspotentials zu berücksichtigen. Die Klassifikation bildet ein Kriterium bei der Beurteilung des Gefährdungspotentials. Auf diese Weise wird die Ausprägung der Gegenmaßnahme an die Charakteristik des Fahrbahnbegrenzungselements angepasst, so dass ein Spurassistent mit situations-angepasster Spurhaltefunktion gebildet wird.

Durch die in den Unteransprüchen aufgeführten Maßnahmen sind vorteilhafte Weiterbildungen und Verbesserungen des im Hauptanspruch angegebenen Spurassistenzsystems gegeben.

Es liegt eine vorteilhafte Weiterbildung vor, wenn die Erkennungseinheit ein Spurerkennungssystem umfasst, welches die Fahrbahnbegrenzungselemente detektiert und eine Ideal- oder SOLL-Fahrlinie ermittelt. Mit dieser Maßnahme wird eine Information erarbeitet, die bei der Auswahl der Gegenmaßnahme verwendet werden kann, um z.B. bei einer Ausweichbewegung als Gegenmaßnahme die Richtung zu bestimmen.

Vorzugsweise weist die Erkennungseinheit ein Prädiktionssystem auf, welches die Wahrscheinlichkeit für das Überfahren des Fahrbegrenzungselements ermittelt. Es ist vorgesehen, dass das Prädiktionssystem eine IST-Fahrlinie berechnet, so dass aus der berechneten IST-Fahrlinie sowie der Sollfahrlinie und/oder den detektierten Fahrbahnbegrenzungselementen die Wahrscheinlichkeit für das Überfahren berechnet wird.

Bei einer vorteilhaften Weiterbildung der Erfindung umfasst die Erkennungseinheit ein Klassifikationssystem, welches jedem Fahrbahnbegrenzungselement ein Gefährdungsprofil zuordnet. Das Klassifikationssystem kann beispielsweise datenbankgestützt sein, wobei in der Datenbank eine Vielzahl von Fahrbahnbegrenzungselementen hinterlegt ist. Dies birgt den Vorteil, dass über einen einfachen Datenbank-Update neue oder neu gestaltete Fahrbahnbegrenzungselemente in ein vorhandenes Spurassistenzsystem eingepflegt werden können. Das Gefährdungsprofil kann Daten über die Überfahrbarkeit des jeweiligen Fahrbahnbegrenzungselements, bevorzugte Gegenmaßnahmenstrategien und weitere Daten umfassen.

Es liegt eine bevorzugte Ausbildung der Erfindung vor, wenn die Schätzeinheit die Information über die Wahrscheinlichkeit des Überfahrens des Fahrbahnbegrenzungselements und das Gefährdungsprofil zusammen auswertet, um das Gefährdungspotential abzuschätzen. Die Auswertung kann dabei über Lernverfahren, Fuzzy Logic, neuronale Netze erfolgen.

Das Spurassistenzsystem ist ferner vorteilhaft ausgeführt, wenn das Reaktionsmodul ausgebildet ist, um eine Interaktion - also z.B. ein Überfahren - des Fahrzeugs mit dem Fahrbahnbegrenzungselement und/oder einer durch das Fahrbahnbegrenzungselement definierten Fahrbahnbegrenzung durch Einleitung von Gegenmaßnahmen zu vermeiden. Durch diese Ausführung wird ein drohender Unfall aktiv verhindert. Alternativ oder ergänzend ist das Reaktionsmodul ausgebildet, um insbesondere unter Berücksichtigung der SOLL-Fahrlinie und der IST-Fahrlinie durch Einleitung von Gegenmaßnahmen eine Fahrlinienoptimierung durchzuführen. Dies Ausführung stellt eine Maßnahme zur präventiven Unfallvermeidung dar, es wird also die Fahrlinie vorausschauend derart optimiert, dass das Gefährdungspotential minimiert wird.

Vorteilhafterweise ist vorgesehen, dass das Reaktionsmodul mit insbesondere optischen, akustischen und/oder haptischen Warneinrichtungen verbindbar ist und/oder verbunden ist, um den Fahrer in Situationen mit hohem Gefährdungspotenzial zu warnen. Beispiele für solche Warneinrichtungen sind Lautsprecher oder Lautsprechersysteme, Warnlampen, Warndisplays, künstlich erzeugtes Nagelbettrattern, Vibrationen des Fahrersitzes oder des Lenkrads usw. Insbesondere kann vorgesehen sein, dass die mit den Warneinrichtungen erzeugten Warnsignale Informationen über die Richtung einer drohenden Gefahr enthalten. Die Intensität der erzeugten Warnsignale, also z.B. die Lautstärke, Helligkeit oder Vibrationsstärke ist abhängig von dem abgeschätzten Gefährdungspotential.

Alternativ oder ergänzend ist vorgesehen, dass das Reaktionsmodul mit einem System zur Querregelung des Fahrzeuge verbindbar und/oder verbunden ist. Das Reaktionsmodul aktiviert also eine Steuerung und/oder Regelung, welche aktiv in die Fahrzeugführung eingreift und insbesondere durch Ausweichmanöver das Gefährdungspotential verringert.

Bei einer vorteilhaften Weiterbildung des Spurassistenzsystems ist eine Verbindung zu weiteren Sensoren vorgesehen. Diese weitere Sensoren können - soweit in dem Fahrzeug bereits vorhanden - kostengünstig an das Spurassistenzsystem angekoppelt werden. Durch die Auswertung von Signalen von weiteren Sensoren können die Ergebnisse des Spurassistenzsystems verifiziert und/oder verbessert werden. So können beispielsweise Informationen über die Eigengeschwindigkeit und/oder GPS-Daten an das Spurassistenzsystem übermittelt werden, um die Berechnung der IST-Fahrlinie zu unterstützen.

Die Erfindung betrifft ferner ein Verfahren zum Betrieb eines Spurassistenzsystems, wobei in einem ersten Schritt ein Fahrbahnbegrenzungselement detektiert und klassifiziert wird, in einem weiteren Schritt ein Gefährdungspotential, welches von dem Fahrbahnbegrenzungselement ausgeht, geschätzt wird und in einem weiteren Schritt Gegenmaßnahmen eingeleitet werden, deren Zeitpunkt und/oder Intensität in Abhängigkeit des Gefährdungspotentials sind. Dabei wird bei dem erfindungsgemäßen Verfahren das oben beschriebene Spurassistenzsystem eingesetzt und somit die ebenfalls obenbeschriebenen Vorteile genutzt.

### Zeichnungen

Weitere Einzelheiten, Merkmale, Merkmalskombinationen, Vorteile und Wirkungen auf der Basis der Erfindung ergeben sich aus der nachfolgenden Beschreibung eines bevorzugten Ausführungsbeispiels der Erfindung und aus den Zeichnungen. Diese zeigen jeweils in schematischer Darstellung:
- Figur 1: ein Ausführungsbeispiel eines Spurassistenzsystems in einer Blockbilddarstellung;
- Figur 2: eine typische Verkehrssituation zur Illustration des Betriebes des Spurassistenzsystems in Figur 1.

### Beschreibung des Ausführungsbeispiels

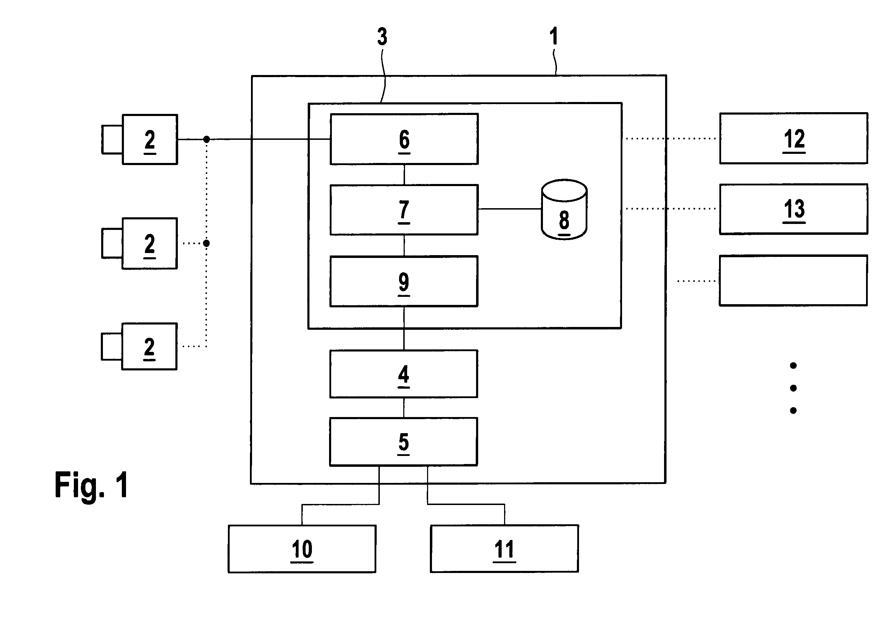

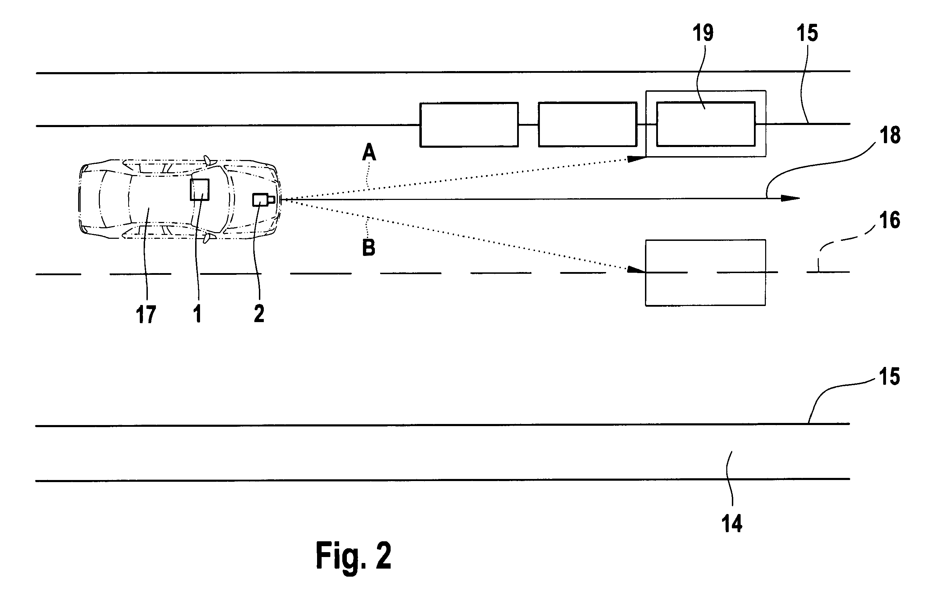

Die Figur 1 zeigt in Blockdarstellung ein Spurassistenzsystem 1, welches mit einer oder mehreren Kameras 2 zur Aufnahme eines Fahrzeugumfelds verschaltet ist. Typischerweise ist das Spurassistenzsystem 1 in einem Fahrzeug integriert. Das Fahrerassistenzsystem 1 dient dazu, in einer Verkehrssituation mit Gefährdungspotential, wie sie beispielsweise in Figur 2 gezeigt ist, den Fahrer bei der Führung des Fahrzeugs zu unterstützen, indem Warnsignale ausgegeben werden und/oder indem aktiv in die Lenkung und/oder die Geschwindigkeitssteuerung eingegriffen wird.

Das Spurassistenzsystem umfasst drei Funktionsgruppen, die Erkennungseinheit 3, die Schätzeinheit 4 und das Reaktionsmodul 5.

Die Erkennungseinheit 3 empfängt den Bilddatenstrom aus der Kamera 2 bzw. aus den Kameras 2 und wertet in einem Spurerkennungssystem 6 die Bilder aus. Bei dieser Auswertung werden Fahrbahnbegrenzungselemente wie z.B. aufgemalte Fahrbahnmarkierungen, Beton-Trennwände, Begrenzungswarnleuchten, Verkehrshüte etc. erkannt und optional über mehrere hintereinanderfolgende Bilder verfolgt, um deren Trajektorien relativ zum eigenen Fahrzeug zu bestimmen. Zudem wird vorzugsweise eine Ideal-Fahrlinie für das eigene Fahrzeug berechnet. Dem Spurerkennungssystem 6 ist ein Klassifikationssystem 7 nachgeschaltet welches die erkannten Fahrbahnbegrenzungselemente klassifiziert. Die Klassifikation kann beispielsweise anhand eines Mustervergleichs mit einem in einer Datenbank 8 hinterlegten Muster erfolgen. In der Datenbank 8 ist für jedes Muster, also für jede klassifizierte Art eines Fahrbegrenzungselements, ein zugeordneter Datensatz enthalten, der weitere Informationen, insbesondere ein Gefährdungsprofil, enthält. Ein derartiges Gefährdungsprofil umfasst beispielsweise Informationen über Kollisionsfolgen mit dem Fahrbegrenzungselement oder Hinweise für angepasste Gegenmaßnahmen. Weiterhin umfasst die Erkennungseinheit 3 ein Prädiktionssystem 9, welches für die detektierten und/oder klassifizierten Fahrbahnbegrenzungselemente eine Wahrscheinlichkeit für eine Kollision mit dem eigenen Fahrzeug ermittelt. Diese Ermittlung erfolgt beispielsweise durch Auswertung der Trajektorien der Fahrbahnbegrenzungselemente relativ zu dem eigenen Fahrzeug. Das Prädiktionssystem 9 ist in der Figur 1 dem Klassifikationssystem 7 nachgeschaltet. Alternativ kann das Prädiktionssystem 9 auch zwischen Spurerkennungssystem 6 und Klassifikationssystem 7 geschaltet sein. Obwohl die Erkennungseinheit 3 aufgeteilt in die separaten Baugruppen Spurerkennungssystem 6, Klassifikationssystem 7, Datenbank 8 und Prädiktionssystem 9 dargestellt und erläutert wurde, ist es auch möglich, dass die Funktionen dieser Baugruppen in einer Einheit oder in anderer Verteilung in mehreren Baugruppen umgesetzt werden.

Die Daten über die detektierten und klassifizierten Fahrbahnbegrenzungselemente, insbesondere das Gefährdungsprofil, die ermittelte Kollisionswahrscheinlichkeit und Daten über die Ideal-Fahrlinie und/oder die IST-Fahrlinie werden an die Schätzeinheit 4 übergeben, die der Erkennungseinheit 3 nachgeschaltet ist. In der Schätzeinheit 4 wird ausgehend von den genannten Daten ein Gefährdungspotential abgeschätzt. Insbesondere wird das Gefährdungsprofil des klassifizierten Fahrbahnbegrenzungselement bei der Schätzung berücksichtigt. Das Gefährdungspotential bezieht sich dabei insbesondere auf die Gefahr, die aus einem Verlassen der Ideal-Fahrlinie und/oder aus einem Überfahren eines Fahrbahnbegrenzungselements resultiert. Die Schätzung erfolgt dabei über vorzugsweise über lineare oder adaptive Filter, neuronale Netze oder Fuzzy Logic.

Als Ergebnis wird von der Schätzeinheit 4 ein Maß für ein Gefährdungspotential durch eine bestimmte Verkehrsituation an ein nachgeschaltetes Reaktionsmodul 5 ausgegeben. Optional werden dem Reaktionsmodul 5 Daten aus dem Gefährdungsprofil von detektierten / klassifizierten Fahrbahnbegrenzungselemente und über die SOLL- und IST- Fahrlinie übergeben. Das Reaktionsmodul 5 leitet in Abhängigkeit von dem Gefährdungspotential und somit von der Klassifikation des oder der detektierten Fahrbahnbegrenzungselemente Gegenmaßnahmen zur Minimierung des Gefährdungspotentials ein. Zur Umsetzung der Gegenmaßnahmen ist das Spurassistenzsystem 1, insbesondere das Reaktionsmodul 5, mit Warneinrichtungen 10 verbunden. Die Warneinrichtungen 10 sind beispielsweise als Warnlampen, Warndisplays für ein optisches Warnsignal, als Summer, Hupe, Lautsprecher oder Lautsprechersystem für ein akustisches Warnsignal oder als Nagelbettimitator zur Erzeugung eines Rattergeräusches, Vibrationseinrichtungen für Fahrersitz oder Lenkrad als haptisches Warnsignal oder einer Kombination davon ausgebildet. Die Intensität und/oder der Zeitpunkt der Ansteuerung der Warneinrichtungen 10 erfolgt durch das Reaktionsmodul 5 in Abhängigkeit von dem übermittelten Gefährdungspotential des Fahrbahnbegrenzungselements.

Alternativ oder ergänzend greift das Reaktionsmodul 5 in die Fahrzeugsteuerung 11 ein, die ebenfalls mit dem Spurassistenzsystem 1, insbesondere mit dem Reaktionsmodul 5, verbunden ist, und leitet ein Ausweichmanöver und/oder eine Geschwindigkeitsanpassung des Fahrzeugs ein. Vorzugsweise steuert das Reaktionsmodul 5 ein System zur Querregelung des Fahrzeugs an. Die Intensität und/oder der Zeitpunkt des Eingreifens in die Fahrzeugsteuerung 11 erfolgt in Abhängigkeit von dem übermittelten Gefährdungspotential des Fahrbahnbegrenzungselements.

Es sind können weitere Sensoren 12 vorgesehen, deren Signale in das Spurassistenzsystem 1, insbesondere in die Erkennungseinheit 3, eingespeist werden. Bei den weitere Sensoren 12 handelt es sich um Sensoren, die Auskunft über die Eigenbewegung des Fahrzeugs geben, wie z.B. Geschwindigkeit, Lenkwinkel, Bremsaktivitäten etc. Ferner können Positionssysteme 13, wie z.B. GPS-Systeme, in das Spurassistenzsystem 1 Informationen einspeisen, die die Ergebnisse der Erkennungseinheit 3 verifizieren können.

Die Figur 2 zeigt einen Abschnitt einer Straße 14 in Draufsicht, die in der Bildebene von links nach rechts verläuft. Die Straße 14 weist in Erstreckungsrichtung jeweils seitlich aufgemalte, durchgezogene Seitenmarkierungen 15 sowie mittig angeordnet eine aufgemalte, gestrichelte Mittenmarkierung 16 auf, die eine Fahrspur und eine Gegenfahrspur voneinander abgrenzt. Auf der in Verlaufsrichtung der Straße 14 links angeordneten Fahrspur befindet sich ein Fahrzeug 17, welches über ein Spurassistenzsystem 1 gemäß Figur 1 verfügt. Ausgehend von dem Fahrzeug 17 sind drei verschiedene Pfeile gezeigt, wobei der durchgezogene Pfeil die Ideal-Fahrlinie 18 des Fahrzeugs 17 repräsentiert, die parallel zu den Seitenmarkierungen 15 und zu der Mittenmarkierung 16 angeordnet ist. Die zwei gestrichelt eingezeichneten Pfeile A und B verkörpern dagegen mögliche IST-Fahrlinien des Fahrzeugs 17, die von der Ideal-Fahrlinie 18 abweichen. Anhand der möglichen IST-Fahrlinien A und B wird nachfolgend die Funktion des Spurassistenzsystems 1 illustriert.

Auf der IST-Fahrlinie A befmdet sich das Fahrzeug 17 in Kollisionskurs mit einer seitlich aufgestellten Beton-Trennwand 19. In einem ersten Schritt wird das Spurassistenzsystem 1 Bilder der Fahrzeugumgebung von einer auf oder in dem Fahrzeug 17 angeordneten Kamera 2 übernehmen. In der Erkennungseinheit 3 wird in einem nächsten Schritt die Beton-Trennwand 19 erkannt und in dem Klassifikationssystem 7 als Beton-Trennwand mit einem zugeordneten Gefährdungsprofil klassifiziert. Das Gefährdungsprofil enthält u.a. die Information, dass eine Beton-Trennwand nicht überfahrbar ist. In dem Prädiktionssystem 9 wird ermittelt, dass die Wahrscheinlichkeit für eine Kollision (Überfahren) von Fahrzeug 17 und Beton-Trennwand 19 sehr hoch ist. Die Schätzeinheit 4 kommt aufgrund des kritischen Gefährdungsprofils der Beton-Trennwand 19 und der hohen Kollisionswahrscheinlichkeit zu dem Ergebnis, dass das Gefährdungspotential sehr hoch ist. Diese Information wird an das Reaktionsmodul 5 weitergegeben, welches ein sehr frühes und intensives Warnsignal und/oder einen sehr frühen und intensiven Eingriff in die Fahrzeugsteuerung initiiert.

Bei der IST-Fahrlinie B wird das Gefährdungspotential dagegen niedriger eingeschätzt, da das Überfahren der Mittenmarkierung zwar aufgrund des Gegenverkehrs ebenfalls gefährlich ist, jedoch nicht - wie bei der Beton-Trennwand 19 - zu einer sofortigen Kollision führt. Aufgrund des niedriger abgeschätzten Gefährdungspotentials werden die durch das Reaktionsmodul 5 eingeleiteten Gegenmaßnahmen später und/oder weniger intensiv als im Fall der IST-Fahrlinie A eingeleitet.

## Patentansprüche

1. Spurassistenzsystem (1) für Fahrzeuge (17), welches an eine im Fahrzeug (17) angebrachte Umfeldsensoreinrichtung (2) anschließbar ist, mit einer Erkennungseinheit (3) zur Detektion von mit der Umfeldsensoreinrichtung (2) erfassten Fahrbahnbegrenzungselementen (15,16, 19), mit einer Schätzeinheit (4) zur Abschätzung von Gefährdungspotentialen durch die Fahrbahnbegrenzungselemente (15, 16, 19) und mit einem Reaktionsmodul (5) zur Einleitung von Gegenmaßnahmen, welches in Abhängigkeit des abgeschätzten Gefährdungspotential den Zeitpunkt und/oder die Intensität der gegenmaßnahme bestimmt,
und die
Erkennungseinheit (3) zur Klassifikation der Fahrbahnbegrenzungselemente (15, 16, 19) und die Schätzeinheit (4) zur Abschätzung des Gefährdungspotentials unter Berücksichtigung der Klassifikation ausgebildet ist,
**dadurch gekennzeichnet, dass**
die Erkennungseinheit (3) ein Prädiktionssystem (9) umfasst, welches zur Ermittlung einer Wahrscheinlichkeit für das Überfahren eines oder mehrere der Fahrbahnbegrenzungselemente (15, 16, 19) und zur Berechnung einer IST-Fahrlinie (A, B) ausgebildet ist
und wenigstens ein Sensor Auskunft über die Eigenbewegung des Fahrzeugs gibt.

2. Spurassistenzsystem (1) nach Anspruch 1, **dadurch gekennzeichnet, dass** die Erkennungseinheit (3) ein Spurerkennungssystem (6) umfasst, welches zur Detektion der Fahrbahnbegrenzungselemente (15, 16, 19) und vorzugsweise zur Berechnung der Ideal-Fahrlinie (18) ausgebildet ist.

3. Spurassistenzsystem (1) nach Anspruch 1 oder 2, **dadurch gekennzeichnet, dass** eine Information, insbesondere das Gefährdungspotenzial der Fahrbahnbegrenzungselemente (15, 16, 19), erarbeitet wird, um bei einer Ausweichmaßnahme eine Richtung (A, B) zu bestimmen.

4. Spurassistenzsystem (1) nach einem der vorhergehenden Ansprüche, **dadurch gekennzeichnet, dass** die Erkennungseinheit (3) ein datenbankgestütztes Klassifikationssystem (7) umfasst, welches jedem Fahrbahnbegrenzungselement (15,16, 19) ein Gefährdungsprofil zuordnet.

5. Spurassistenzsystem (1) nach Anspruch 4, **dadurch gekennzeichnet, dass** die Schätzeinheit (4) unter Verwendung der ermittelten Wahrscheinlichkeit für das Überfahren des Fahrbahnbegrenzungselements (15, 16, 19) und dem Gefährdungsprofil des Fahrbahnbegrenzungselements (15, 16,19) das Gefährdungspotential abschätzt, unter Zuhilfenahme von linearen oder adaptiven Filtern und/oder neuronalen Netzen und/oder Fuzzy Logik und/oder Lernverfahren.

6. Spurassistenzsystem (1) nach einem der vorhergehenden Ansprüche, **dadurch gekennzeichnet, dass** das Reaktionsmodul (5) zur Einleitung von Gegenmaßnahmen zur Vermeidung einer Interaktion des Fahrzeugs (17) mit dem Fahrbahnbegrenzungselement (15, 16, 19) und/oder zur Fahrlinienoptimierung des Fahrzeugs (17) ausgebildet ist.

7. Spurassistenzsystem (1) nach einem der vorhergehenden Ansprüche, **dadurch gekennzeichnet, dass** das Reaktionsmodul (5) mit insbesondere optischen, akustischen und/oder haptischen Warneinrichtungen (10) verbindbar ist.

8. Spurassistenzsystem (1) nach einem der vorhergehenden Ansprüche, **dadurch gekennzeichnet, dass** das Reaktionsmodul (5) mit einem System zur Querregelung (11) verbindbar ist, welches vorzugsweise der Lenkung des Fahrzeugs (17) ein Lenkmoment aufprägt.

9. Spurassistenzsystem (1) nach einem der vorhergehenden Ansprüche, **dadurch gekennzeichnet, dass** das Spurassistenzsystem (1), insbesondere die Erkennungseinheit (3) oder das Reaktionsmodul (5), mit weiteren Sensoren (12) verbindbar ist, wie z.B. Sensoren zur Bestimmung der Eigengeschwindigkeit, Sensoren zur Bestimmung der IST-Fahrlinie, GPS-System (13) o.ä..

10. Verfahren zum Betrieb eines Spurassistenzsystems (1) nach einem der vorhergehenden Ansprüche, wobei in einem ersten Schritt ein Fahrbahnbegrenzungselement (15, 16, 19) detektiert und klassifiziert wird, in einem weiteren Schritt ein Gefährdungspotential, welches von dem Fahrbahnbegrenzungselement (15, 16, 19) ausgeht, geschätzt wird und in einem weiteren Schritt Gegenmaßnahmen eingeleitet werden, deren Zeitpunkt und/oder Intensität in Abhängigkeit des Gefährdungspotentials sind.

## Claims

1. Lane assistance system (1) for vehicles (17), which lane assistance system can be connected to a surroundings sensor device (2) which is fitted in the vehicle (17), having an identification unit (3) for detecting carriageway boundary elements (15, 16, 19) which are registered by the surroundings sensor device (2), having an estimation unit (4) for estimating hazard potentials represented by the carriageway boundary elements (15, 16, 19), and having a reaction module (5) for initiating countermeasures, which reaction module (5) determines the time and/or the intensity of the countermeasures as a function of the estimated hazard potentials, and the identification unit (3) is designed to classify the carriageway boundary elements (15, 16, 19) and the estimation unit (4) is designed to estimate the hazard potential taking into account the classification, **characterized in that** the identification unit (3) comprises a prediction system (9) which is designed to establish a probability of driving over one or more of the carriageway boundary elements (15, 16, 19) and to calculate an ACTUAL line of travel (A, B), and at least one sensor provides information about the movement of the vehicle in question.

2. Lane assistance system (1) according to Claim 1, **characterized in that** the identification unit (3) comprises a lane identification system (6) which is designed to detect the carriageway boundary elements (15, 16, 19) and preferably to calculate the ideal line of travel (18).

3. Lane assistance system (1) according to Claim 1 or 2, **characterized in that** an item of information, in particular the hazard potential of the carriageway boundary elements (15, 16, 19), is developed in order to determine a direction (A, B) in the event of an avoidance measure.

4. Lane assistance system (1) according to one of the preceding claims, **characterized in that** the identification unit (3) comprises a database-assisted classification system (7) which assigns a hazard profile to each carriageway boundary element (15, 16, 19).

5. Lane assistance system (1) according to Claim 4, **characterized in that** the estimation unit (4) estimates the hazard potential using the established probability of driving over the carriageway boundary element (15, 16, 19) and the hazard profile of the carriageway boundary element (15, 16, 19), with the aid of linear or adaptive filters and/or neural networks and/or fuzzy logic and/or learning methods.

6. Lane assistance system (1) according to one of the preceding claims, **characterized in that** the reaction module (5) is designed to initiate countermeasures for avoiding interaction between the vehicle (17) and the carriageway boundary element (15, 16, 19) and/or to optimize the line of travel of the vehicle (17).

7. Lane assistance system (1) according to one of the preceding claims, **characterized in that** the reaction module (5) can be connected to, in particular, optical, acoustic and/or haptic warning devices (10).

8. Lane assistance system (1) according to one of the preceding claims, **characterized in that** the reaction module (5) can be connected to a system for lateral control (11) which preferably imposes a steering torque on the steering system of the vehicle (17).

9. Lane assistance system (1) according to one of the preceding claims, **characterized in that** the lane assistance system (1), in particular the identification unit (3) or the reaction module (5), can be connected to further sensors (12), for example sensors for determining the speed of the vehicle in question, sensors for determining the ACTUAL line of travel, GPS system (13) or the like.

10. Method for operating a lane assistance system (1) according to one of the preceding claims, with a carriageway boundary element (15, 16, 19) being detected and classified in a first step, a hazard potential which is represented by the carriageway boundary element (15, 16, 19) being estimated in a further step, and countermeasures being initiated in the further step, the time and/or intensity of the said countermeasures being a function of the hazard potential.

## Revendications

1. Système d'assistance de trajectoire (1) pour véhicule (17) susceptible d'être relié à une installation de capteur d'environnement (2) installée dans un véhicule (17), comportant une unité de reconnaissance (3) pour détecter des éléments de voie de circulation (15, 16, 19) saisis par l'installation de capteur d'environnement (2), une unité d'évaluation (4) pour évaluer les potentiels de risques par les éléments de voie de circulation (15, 16, 19) ainsi qu'un module de réaction (5) pour lancer des contre-mesures qui, en fonctionnement du potentiel de risque évalué, détermine l'instant et/ ou l'intensité des contre-mesures, et
l'unité de reconnaissance (3) est réalisée pour classer les éléments de voie de circulation (15, 16, 19) et l'unité d'évaluation (4) pour évaluer le potentiel de risque en tenant compte du classement,
**caractérisé en ce que**
l'unité de reconnaissance (3) comprend un système de prédiction (9) qui est réalisé pour déterminer une probabilité de dépassement d'un ou plusieurs éléments de voie de circulation (15, 16, 19) et pour calculer une ligne de trajet réelle (A, B), et
au moins un capteur fournit une information concernant le mouvement propre du véhicule.

2. Système d'assistance de trajectoire de véhicule (1) selon la revendication 1,
**caractérisé en ce que**
l'unité de reconnaissance (3) comprend un système de détection de trajectoire (6) réalisé pour détecter des éléments limitant une chaussée (15, 16, 19) et de préférence pour calculer la ligne de trajectoire idéale (18).

3. Système d'assistance de trajectoire de véhicule (1) selon l'une quelconque des revendications 1 ou 2,
**caractérisé en ce qu'**
on traite une information notamment le potentiel de risque des éléments limitant la chaussée (15, 16, 19) pour déterminer une direction (A, B) dans le cas d'une mesure de déviation.

4. Système d'assistance de trajectoire de véhicule (1) selon l'une quelconque des revendications précédentes,
**caractérisé en ce que**
l'unité de reconnaissance (3) comprend un système de classement (7) assisté par une banque de données qui associe un profil de risque à chaque élément de limitation de voie de circulation (15, 16, ,19).

5. Système d'assistance de trajectoire de véhicule (1) selon la revendication 4,
**caractérisé en ce que**
l'unité d'évaluation (4) utilise la probabilité déterminée de dépassement de l'élément de limitation de voie de circulation (15, 16, 19) et le profil de risque de l'élément de limitation de voie de circulation (15, 16, 19) pour évaluer le risque potentiel,
avec l'assistance de filtres linéaires ou adaptatifs et/ou de réseaux neuronaux et/ou de logique flou et/ou de procédés d'apprentissage.

6. Système d'assistance de trajectoire de véhicule (1) selon l'une quelconque des revendications précédentes,
**caractérisé en ce que**
le module de réaction (5) est réalisé pour lancer des contre-mesures pour éviter une interaction du véhicule (17) avec un élément de limitation de voie de circulation (15, 16, 19) et/ou pour optimiser la ligne de trajectoire du véhicule (17).

7. Système d'assistance de trajectoire de véhicule (1) selon l'une quelconque des revendications précédentes,
**caractérisé en ce que**
le module de réaction (5) est relié notamment à des installations d'avertissement (10), optiques, acoustiques et/ou haptiques.

8. Système d'assistance de trajectoire de véhicule (1) selon l'une quelconque des revendications précédentes,
**caractérisé en ce que**
le module de réaction (8) est relié à un système de régulation transversal (11) qui imprime un couple de guidage de préférence à la direction du véhicule (17).

9. Système d'assistance de trajectoire de véhicule (1) selon l'une quelconque des revendications précédentes,
**caractérisé en ce que**
le système d'assistance de trajectoire de véhicule automobile (1), notamment l'unité de reconnaissance (3) ou le module de réaction (5) peuvent être reliés à d'autres capteurs (12) tels que par exemple des capteurs pour déterminer la vitesse propre, des capteurs pour déterminer la ligne de trajectoire réelle, un système GPS (13) ou autres.

10. Procédé de fonctionnement d'un système d'assistance de trajectoire d'un véhicule automobile (1) selon l'une quelconque des revendications précédentes, selon lequel dans une première étape, on détecte un élément de limitation de voie de circulation (15, 16, 19) et on le classe, dans une autre étape, on évalue un potentiel de risque issu de l'élément de limitation de voie de circulation (15, 16, 19) et dans une autre étape, on lance des contre-mesures dont l'instant et/ou l'intensité dépendent du potentiel de risque.
